# EUROPEAN PATENT SPECIFICATION

(11) **EP 3 253 839 B1**
(45) Date of publication and mention of the grant of the patent: **25.04.2018**
(21) Application number: 16702563.4
(22) Date of filing: 02.02.2016
(51) Int. Cl.: C09J 131/04

(54) **ADHESIVE COMPOSITION**
KLEBSTOFFZUSAMMENSETZUNG
COMPOSITION ADHÉSIVE

(30) Priority: 02.02.2015 EP 15382032; 10.03.2015 EP 15382105
(43) Date of publication of application: 13.12.2017
(73) Proprietor: Ceys, S. A., 08907 L'Hospitalet de Llobregat (ES)
(72) Inventor: BARQUEROS SÁNCHEZ, Bernardo, 08907 L'hospitalet De Llobregat (ES); MATEO MARQUÉS, Oscar, 08907 L'hospitalet De Llobregat (ES)
(74) Representative: Ponti & Partners, S.L.P
(86) International application number: PCT/EP2016/052194
(87) International publication number: WO 2016/124604

(56) References cited:
- WO-A1-2008/011455
- US-A- 2 963 454
- US-A- 5 306 749

## Description

### Field of the invention

The present invention relates to the field of adhesives. In particular the present invention relates to polyvinyl acetate-based adhesives comprising a natural flour selected from millet and oats. More preferably, said natural flour is from millet.

### Background

Polyvinyl acetate (PVA)-based adhesives are especially designed to join all kind of wood for all professional purposes. This kind of adhesives cure by loss of its fluid carrier, in this case water. The polymer, dispersed in the water, separates out as a sticky mass which gives good initial tack and then dries to a strong film which bonds the substrates together. The rate of cure is controlled by the speed with which water is lost and generally, to obtain good joints, one of the substrates must be absorbent.

Alternatively, the water is driven off completely before the joint is closed. Two such coated surfaces will bond immediately, in the case of rubber-based contact adhesives. Alternatively, the adhesive can be designed to be reactivated by solvent, heat or to be pressure-sensitive.

A common and well-known way for improving PVA adhesives is to mix them with wood fibers. By means of this, a better gap filling capacity, sandability and wood appearance when cured are achieved. Nevertheless, it has been disclosed, as shown in the Material Safety Data Sheet (MSDS) (see http://www.awf.com/downloads/Safety%20Data%20Sheet%20for%20Wood%20Flour% 20V1.0%2009252012.pdf) that wood dust, depending on species, may cause dermatitis upon prolonged, repetitive contact; may cause respiratory sensitization and/or irritations. International Agency for Research on Cancer (IARC) classifies wood dust as a carcinogen to humans. This classification is based primarily on IARC's evaluation of increased rash in the occurrence of Aden carcinomas of the nasal cavities and para nasal sinuses associated with exposure to wood dust.

Accordingly, the use of wood fibers as a reinforcing filler for PVA has been proved as dangerous for workers that are exposed to wood dust inhalation during production, or even for users that are exposed to wood dust when glue is sanded and a mixture of wood and glue is created. US5306749, WO2008/011455 and US2963454 disclose adhesives based on polyvinyl acetate. The present inventors have found an alternative to the use of wood fibers in polyvinyl acetate-based adhesives. They have surprisingly found that the use offlourfrom vegetal species such as millet and oats can avoid this problem of handling a cancerous product, while improving some of the properties of the adhesive composition to be used in bonding wood. In addition, at the level of sensory and visual characteristics the particles of flour from a vegetal species selected from millet and oats are very similar to those of wood fibers but without the above mentioned drawbacks.

### Description of the invention

In a first aspect, the present invention relates to an adhesive composition comprising at least 50 wt % of polyvinyl acetate (PVA), preferably at least 60 wt% of polyvinyl acetate (PVA), more preferably at least 70 wt% of polyvinyl acetate (PVA), more preferably at least 80 wt% of polyvinyl acetate (PVA) and even more preferably at least 90 wt% of polyvinyl acetate (PVA), wherein said composition further comprises a natural flour selected from: millet and oats, or a mixture thereof, and further wherein wood fibers are not present.
In the present disclosure "natural flour" should be understood as a flour obtained from a natural source, in particular a plant, selected from millet and oats, or a mixture thereof. In the present disclosure when reference is made to "millet or "oats" it is also included "whole grain millet" or "whole grain oats"
In a preferred embodiment, said natural flour is present in an amount between 0.1-15 wt% of the whole composition.

In another preferred embodiment, said natural flour is millet flour.
In another preferred embodiment, the adhesive composition further comprises one or more of a pigment, an antifoam agent, an inorganic filler, a preservative and a coalescent agent.

In the present disclosure, when reference is made to a component of the composition (e.g. "a pigment" or just "pigment") it should be understood that this component can be present as a mixture of compounds under this name (e.g. pigment).

Preferably, said pigment is selected from an aqueous dispersion of iron oxide and a pigmentary organic slurry, or a combination thereof.

Preferably, said antifoam agent is selected from insoluble oils, polydimethylsiloxanes and other silicone-based compounds, aqueous emulsions such as waxes dispersed in water, long chain fatty acid esters and alkyl poliacrylates.

Preferably, said inorganic filler is selected from sulphates, carbonates, silicates and talc, or a combination thereof.

Preferably, said preservative is selected from MIT (Methylisothiazolinone), BIT (1,2-benzisothiazolin-3-one), OIT (2-n-octyl-4-isothiazolin-3-one), Bronopol, CIT (5-Chloro-2-Methyl-Isothiazolin) or a combination thereof.

Preferably, said coalescent agent is a solvent of high molecular weight, such as alcohol esters.

In a further preferred embodiment, the adhesive composition comprises:
- PVA between 50 and 90 wt%
- antifoam agent(s) between 0.1 and 0.500 wt%
- pigment(s) between 0.01-0.02 wt%
- inorganic filler(s) between 5 and 30 wt%
- coalescent agent(s) between 0.05 and 0.5 wt%
- plant-based flour(s), preferably from millet, between 0.1 and 15 wt%
- preservative(s) between 0.1 and 2 wt%.

As shown in the Examples section, the adhesive composition of the present invention presents a much higher sandability (resistive force of friction) as long as a better visual aspect (important for the finishes in binding materials), while retaining at acceptable values the properties of hardness and tensile strength.

In a second aspect, the present invention relates to a process for manufacturing the adhesive composition, according to any of the embodiments disclosed herein, wherein said process comprises the step of mixing the components of the composition according to any of the embodiments disclosed herein.

In a preferred embodiment, said mixture is performed in a mixer equipped with high shear cowles disks.

In a third aspect, the present invention relates to the use of a natural flour selected from: millet and oats, or a mixture thereof, as a filler, in an adhesive composition comprising at least 50 wt % of polyvinyl acetate (PVA), preferably at least 60 wt% of polyvinyl acetate (PVA), more preferably at least 70 wt% of polyvinyl acetate (PVA), more preferably at least 80 wt% of polyvinyl acetate (PVA) and even more preferably at least 90 wt% of polyvinyl acetate (PVA), and with no wood fibers present in said composition.

In a preferred embodiment, said natural flour is used in the composition in an amount between 0.1-15 wt% of the whole composition.

In another preferred embodiment, said natural flour used in the composition is millet flour.

Preferably, said natural flour is used in a composition further comprising one or more of a pigment, an antifoam agent, an inorganic filler, a preservative and a coalescent agent as already defined above for the first aspect of the invention.

In a further embodiment, the adhesive composition as disclosed herein in all the embodiments is to be used for bonding wood or any material, for example porous materials, to wood.

### EXAMPLES

The present invention is further disclosed by way of examples which only intend to illustrate the present invention and by no means are limiting the scope thereof.

Production of an example of an adhesive composition according to the present invention:

### Production equipment:

Mixer with cylindrical vessel and cowles equipped with cooling and vacuum device

### Process:

A PVA dispersion is added first to the mixer and the mixing is started at minimum rpm. The antifoaming agent(s), coalescent agent(s), preservative agent(s) are added slowly. After 15 minutes of mixing at low rpm, the mixing speed is increased and the inorganic filler(s), pigment(s) and plant-based flour(s) are added. The mixing is kept for 10 minutes. The mixing speed is reduced to minimum and the vacuum equipment is connected in order to allow air bubbles to exit. After 5 minutes the product is obtained.

### Comparative examples

In addition, several comparative examples have been developed in order to determine the advantageous properties of the composition of the present invention.

**Comparative table 1: Variation of PVA and inorganic filler, while maintaining the same wt. % of flour derived from plants.**

| | ***C1*** | ***C2*** | ***C3*** |
|---|---|---|---|
| PVA dispersion | ***50*** | ***65*** | ***80*** |
| Antifoaming | ***0,2*** | ***0,2*** | ***0,2*** |
| Pigment | ***0,1*** | ***0,1*** | ***0,1*** |
| Inorganic filler | ***44*** | ***29*** | ***14*** |
| Coalescent agent | ***0,1*** | ***0,1*** | ***0,1*** |
| Plant-based flour (millet) | ***5*** | ***5*** | ***5*** |
| Preservative | ***0,6*** | ***0,6*** | ***0,6*** |
| PROPERTIES | | | |
| PH | ***4,5*** | ***4,5*** | ***4,5*** |
| VISCOSITY | ***28.500 cps*** | ***10.000 cps*** | ***9.000 cps*** |
| TENSILE STRENGTH | ***55 kg*/*cm2*** | ***84 kg*/*cm2*** | ***125,39 kg*/*cm2*** |

By comparing C1, C2 and C3, these data allow to conclude that a PVA dispersion at 50 wt.% is the minimum % of PVA for keeping the acceptable values of viscosity and tensile strength. With these values, a liquid glue has still an acceptable performance. Optimally, the viscosity is under 15.000 cps and the tensile strength is higher than 80 kg/cm².

**Comparative table 2: Variation of wt% of flour derived from plants and inorganic filler, while maintaining the same PVA wt%.**

| | ***C4*** | ***C5*** | ***C6*** | ***C7*** |
|---|---|---|---|---|
| PVA dispersion | ***75*** | ***75*** | ***75*** | ***75*** |
| Antifoaming | ***0,2*** | ***0,2*** | ***0,2*** | ***0,2*** |
| Pigment | ***0,1*** | ***0,1*** | ***0,1*** | ***0,1*** |
| Inorganic filler | ***24*** | ***19*** | ***14*** | ***4*** |
| Coalescent agen | ***0,1*** | ***0,1*** | ***0,1*** | ***0,1*** |
| Plant-based flour (millet) | ***0*** | ***5*** | ***10*** | ***20*** |
| Preservative | ***0,6*** | ***0,6*** | ***0,6*** | ***0,6*** |

| ***PROPERTIES*** | | | | |
|---|---|---|---|---|
| PH | ***4,5*** | ***4,5*** | ***4,5*** | ***4,5*** |
| VISCOSITY | ***8500 cps*** | ***9000 cps*** | ***17500 cps*** | ***42500 cps*** |
| TENSILE STRENGTH | ***141 kg*/*cm2*** | ***125 kg*/*cm2*** | ***114 kg*/*cm2*** | ***104 kg*/*cm2*** |
| HARDNESS SHORE A | ***95*** | ***90*** | ***85*** | ***82*** |
| RESISTIVE FORCE OF FRICTION (SANDABILITY) | ***Very bad*** | ***Good*** | ***Good*** | ***Good but the film is a bit soft*** |
| VISUAL ASPECT (visual similarity to natural oak wood) | | | | |
| BRIGHTNESS (1(low) - 5 (high)) | ***1*** | ***4*** | ***4*** | ***5*** |
| COLOUR (1(low) - 5 (high)) | ***2*** | ***4*** | ***4*** | ***3*** |
| TEXTURE (1(low) - 5 (high)) | ***1*** | ***5*** | ***5*** | ***5*** |

pH: measurement made with a digital pH meter
Viscosity: Measured by using a Brookfield Viscometer
Tensile strength: shear tensile test in a dynamometric equipment. According to an internal test method, 2 cm² of 2 pieces of beech wood are overlapped and allowed to cure for 1 week at controlled temperature conditions. They are then submitted to a tensile stress to assess the tensile breaking strength of the binding.
Hardness (Shore A): As shown in e.g. http://en.wikipedia.org/wiki/Shore_durometer. In particular, on a totally cured film of elastic product, the surface hardness is evaluated according to the elastic reaction thereof when applying thereon a perpendicular sharp force. This test is performed with durometer for Shore A and provides data for Hardness on a scale of 0 to 100, 0 being minimum and 100 maximum hardness.
Sandability: Assessment of ease for sanding and malleability of the adhesive by a wooden block with a No. 60 sandpaper incorporated thereon. The sanding resistance to sliding of the sandpaper is evaluated.
Visual aspect: Comparative visual assessment assessing brightness, colour and texture vs. natural oak wood as a standard.

C4: It has no plant-based flour and the properties are shown as bad or very bad.
C5-C6: These are optimal composition with good or very good properties.
C7: This is a good composition although the viscosity is a bit higher than the optimal range which causes the film to be a bit soft.

## Claims

1. Adhesive composition comprising at least 50 wt % of polyvinyl acetate (PVA), wherein said composition further comprises a natural flour selected from: millet and oats, or a mixture thereof, and further wherein wood fibers are not present.

2. Adhesive composition, according to claim 1, wherein the amount of polyvinyl acetate (PVA) in the composition is at least 60 wt%, preferably at least 70 wt%.

3. Adhesive composition, according to claim 1 or 2, wherein said natural flour is present in an amount between 0.1-15 wt% of the whole composition.

4. Adhesive composition, according to any of claims 1 to 3, wherein said natural flour is millet flour.

5. Adhesive composition, according to any of the preceding claims, wherein said composition further comprises one or more of a pigment, an antifoam agent, an inorganic filler, a preservative and a coalescent agent.

6. Adhesive composition, according to claim 5, wherein said pigment is selected from an aqueous dispersion of iron oxide and a pigmentary organic slurry, or a combination thereof; said antifoam agent is selected from oil, dust, aqueous emulsions, silicone, long chain fatty acid esters and alkyl poliacrylates, or a combination thereof; said inorganic filler is selected from sulphates, carbonates, silicates and talc, or a combination thereof; said preservative is selected from MIT (Methylisothiazolinone), BIT (1,2-benzisothiazolin-3-one), OIT (2-n-octyl-4-isothiazolin-3-one), Bronopol, CIT (5-Chloro-2-Methyl-Isothiazolin) or a combination thereof; and said coalescent agent is a solvent of high molecular weight.

7. Adhesive composition, according to any of the preceding claims, comprising:
- PVA between 50 and 90 wt%
- at least one antifoam agent between 0.1 and 0.500 wt%
- at least one pigment between 0.01-0.02 wt%
- at least one inorganic filler between 5 and 30 wt%
- at least one coalescent agent between 0.05 and 0.5 wt%
- at least one plant-based flour selected from millet and oats, preferably from millet, between 0.1 and 15 wt%
- at least one preservative between 0.1 and 2 wt%.

8. Process for manufacturing the adhesive composition, according to any of the preceding claims, wherein said process comprises the step of mixing the components of the composition.

9. Process, according to claim 8, wherein said mixture is performed in a mixer equipped with high shear cowles disks.

10. Use of a natural flour selected from millet and oats, or a mixture thereof, in an adhesive composition comprising at least 50 wt % of polyvinyl acetate (PVA) and with no wood fibers present in said composition.

11. Use, according to claim 10, wherein said natural flour is used in the composition in an amount between 0.1-15 wt% of the whole composition.

12. Use, according to claims 10 or 11, wherein said natural flour is millet flour.

13. Use, according to any of claims 10 to 12, wherein said natural flour is used in a composition further comprising one or more of a pigment, an antifoam agent, an inorganic filler, a preservative and a coalescent agent.

14. Use, according to claim 13, wherein said natural flour is used in a composition wherein said pigment is selected from an aqueous dispersion of iron oxide and a pigmentary organic slurry, or a combination thereof; said antifoam agent is selected from insoluble oils, polydimethylsiloxanes and other silicone-based compounds, waxes dispersed in water, long chain fatty acid esters and alkyl poliacrylates, or a combination thereof; said inorganic filler is selected from sulphates, carbonates, silicates and talc, or a combination thereof; said preservative is selected from MIT (Methylisothiazolinone), BIT (1,2-benzisothiazolin-3-one), OIT (2-n-octyl-4-isothiazolin-3-one), Bronopol, CIT (5-Chloro-2-Methyl-Isothiazolin) or a combination thereof; and said coalescent agent is a solvent of high molecular weight.

15. Use of the adhesive composition according to any of claims 1 to 7 for bonding wood or any material to wood.

## Patentansprüche

1. Haftmittelzusammensetzung, die zumindest 50 Gew.-% Polyvinylacetat (PVA) aufweist, wobei die Zusammensetzung ferner ein natürliches Mehl, das aus Hirse und Hafer ausgewählt ist, oder ein Gemisch derselben aufweist, und in der ferner keine Holzfasern vorhanden sind.

2. Haftmittelzusammensetzung gemäß Anspruch 1, bei der die Menge von Polyvinylacetat (PVA) in der Zusammensetzung zumindest 60 Gew.-%, vorzugsweise zumindest 70 Gew.-% beträgt.

3. Haftmittelzusammensetzung gemäß Anspruch 1 oder 2, bei der das natürliche Mehl in einer Menge zwischen 0,1 und 15 Gew.-% der gesamten Zusammensetzung vorliegt.

4. Haftmittelzusammensetzung gemäß einem der Ansprüche 1 bis 3, bei der das natürliche Mehl Hirsemehl ist.

5. Haftmittelzusammensetzung gemäß einem der vorhergehenden Ansprüche, bei der die Zusammensetzung ferner eines oder mehrere eines Pigments, eines Antischaummittels, eines anorganischen Füllstoffs, eines Konservierungsstoffs und eines Koaleszenzmittels aufweist.

6. Haftmittelzusammensetzung gemäß Anspruch 5, bei der das Pigment aus einer wässrigen Dispersion von Eisenoxid und einem pigmenthaltigen organischen Schlammgemisch oder einer Kombination derselben ausgewählt ist; das Antischaummittel aus Öl, Staub, wässrigen Emulsionen, Silikon, langkettigen Fettsäureestern und Alkylpolyacrylaten oder einer Kombination derselben ausgewählt ist; der anorganische Füllstoff aus Sulfaten, Karbonaten, Silikaten und Talk oder einer Kombination derselben ausgewählt ist; der Konservierungsstoff aus MIT (Methylisothiazolinon), BIT (1,2-Benzisothiazolin-3-on), OIT (2-n-Octyl-4-isothiazolin-3-on), Bronopol, CIT (5-Chloro-2-methyl-isothiazolin) oder einer Kombination derselben ausgewählt ist und das Koaleszenzmittel ein Lösungsmittel mit hohem Molekulargewicht ist.

7. Haftmittelzusammensetzung gemäß einem der vorhergehenden Ansprüche, die folgende Merkmale aufweist:
- PVA zwischen 50 und 90 Gew.-%,
- zumindest ein Antischaummittel zwischen 0,1 und 0,500 Gew.-%,
- zumindest ein Pigment zwischen 0,01-0,02 Gew.-%,
- zumindest einen anorganischen Füllstoff zwischen 5 und 30 Gew.-%,
- zumindest ein Koaleszenzmittel zwischen 0,05 und 0,5 Gew.-%,
- zumindest ein Mehl auf Pflanzenbasis, das aus Hirse und Hafer, vorzugsweise aus Hirse, ausgewählt ist, zwischen 0,1 und 15 Gew.-%,
- zumindest einen Konservierungsstoff zwischen 0,1 und 2 Gew.-%.

8. Verfahren zur Herstellung der Haftmittelzusammensetzung gemäß einem der vorhergehenden Ansprüche, wobei das Verfahren den Schritt eines Mischens der Komponenten der Zusammensetzung aufweist.

9. Verfahren gemäß Anspruch 8, bei dem das Gemisch in einem Mischer ausgeführt wird, der mit Cowles-Scheiben mit hoher Scherkraft ausgestattet ist.

10. Verwendung eines natürlichen Mehls, das aus Hirse und Hafer ausgewählt ist, oder eines Gemischs derselben in einer Haftmittelzusammensetzung, die zumindest 50 Gew.-% Polyvinylacetat (PVA) und keine in der Zusammensetzung vorhandenen Holzfasern aufweist.

11. Verwendung gemäß Anspruch 10, bei der das natürliche Mehl in der Zusammensetzung in einer Menge zwischen 0,1 und 15 Gew.-% der gesamten Zusammensetzung verwendet wird.

12. Verwendung gemäß Anspruch 10 oder 11, bei der das natürliche Mehl Hirsemehl ist.

13. Verwendung gemäß einem der Ansprüche 10 bis 12, bei der das natürliche Mehl in einer Zusammensetzung verwendet wird, die ferner eines oder mehrere eines Pigments, eines Antischaummittels, eines anorganischen Füllstoffs, eines Konservierungsstoffs und eines Koaleszenzmittels aufweist.

14. Verwendung gemäß Anspruch 13, bei der das natürliche Mehl in einer Zusammensetzung verwendet wird, wobei das Pigment aus einer wässrigen Dispersion von Eisenoxid und einem pigmenthaltigen organischen Schlammgemisch oder einer Kombination derselben ausgewählt ist; das Antischaummittel aus unlöslichen Ölen, Polydimethylsiloxanen und anderen Verbindungen auf Silikonbasis, in Wasser aufgelösten Wachsen, langkettigen Fettsäureestern und Alkylpolyacrylaten oder einer Kombination derselben ausgewählt ist; der anorganische Füllstoff aus Sulfaten, Karbonaten, Silikaten und Talk oder einer Kombination derselben ausgewählt ist; der Konservierungsstoff aus MIT (Methylisothiazolinon), BIT (1,2-Benzisothiazolin-3-on), OIT (2-n-Octyl-4-isothiazolin-3-on), Bronopol, CIT (5-Chloro-2-methyl-isothiazolin) oder einer Kombination derselben ausgewählt ist und das Koaleszenzmittel ein Lösungsmittel mit hohem Molekulargewicht ist.

15. Verwendung der Haftmittelzusammensetzung gemäß einem der Ansprüche 1 bis 7 zum Verbinden von Holz oder einem beliebigen Material mit Holz.

## Revendications

1. Composition adhésive comprenant au moins 50 % en masse d'acétate de polyvinyle (PVA), dans laquelle ladite composition comprend en outre une farine naturelle sélectionnée parmi : le millet et l'avoine, ou un mélange de ceux-ci, et dans laquelle en outre aucune fibre de bois n'est présente.

2. Composition adhésive, selon la revendication 1, dans laquelle la quantité d'acétate de polyvinyle (PVA) dans la composition est d'au moins 60 % en masse, de préférence d'au moins 70 %.

3. Composition adhésive selon la revendication 1 ou 2, dans laquelle ladite farine naturelle est présente dans une quantité comprise entre 0,1 et 15 % en masse de la composition totale.

4. Composition adhésive selon une quelconque des revendications 1 à 3, dans laquelle ladite farine naturelle est de la farine de millet.

5. Composition adhésive, selon une quelconque des revendications précédentes, dans laquelle ladite composition comprend en outre un ou plusieurs pigments, un agent antimoussant, un remplisseur inorganique, un conservateur et un agent coalescent.

6. Composition adhésive, selon la revendication 5, dans laquelle ledit pigment est sélectionné parmi une dispersion aqueuse d'oxyde de fer et une suspension pigmentaire organique, ou une combinaison de celles-ci ; ledit agent antimoussant est sélectionné parmi l'huile, la poussière, des émulsions aqueuses, le silicone, des esters d'acides gras à longue chaîne et des polyacrylates d'alkyle, ou une combinaison de ceux-ci ; ledit remplisseur inorganique est sélectionné parmi des sulfates, carbonates, silicates et du talc, ou une combinaison de ceux-ci ; ledit conservateur est sélectionné parmi la MIT (Méthylisothiazolinone), la BIT (1,2-benzisothiazolin-3-one), l'OIT (2-n-octyl-4-isothiazolin-3-one), le Bronopol, la CIT (5-Chloro-2-Méthyl-Isothiazolin) ou une combinaison de ceux-ci ; et ledit agent coalescent est un solvant de masse moléculaire élevée.

7. Composition adhésive, selon une quelconque des revendications précédentes, comprenant :
- un PVA compris entre 50 et 90 % en masse
- au moins un agent antimoussant compris entre 0,1 et 0,500 % en masse
- au moins un pigment compris entre 0,01 et 0,02 % en masse
- au moins un remplisseur inorganique compris entre 5 et 30 % an masse
- au moins un agent coalescent compris entre 0,05 et 0,5 % en masse
- au moins une farine à base de plantes sélectionnée parmi le millet et l'avoine, de préférence à partir du millet, compris entre 0,1 et 15 % en masse
- au moins un conservateur compris entre 0,1 et 2 % en masse.

8. Procédé de fabrication de la composition adhésive, selon une quelconque des revendications précédentes, dans lequel ledit procédé comprend l'étape de mélange des composants de la composition.

9. Procédé, selon la revendication 8, dans lequel ledit mélange est réalisé dans un mélangeur équipé de disques Cowles doté d'un haut pouvoir de cisaillement.

10. Utilisation d'une farine naturelle sélectionnée parmi le millet et l'avoine, ou un mélange de ceux-ci, dans une composition adhésive comprenant au moins 50 % en masse d'acétate de polyvinyle (PVA) et sans présence de fibres de bois dans ladite composition.

11. Utilisation, selon la revendication 10, dans laquelle ladite farine naturelle est utilisée dans la composition dans une quantité comprise entre 0,1 et 15 % en masse de la composition totale.

12. Utilisation, selon les revendications 10 ou 11, dans laquelle ladite farine naturelle est une farine de millet.

13. Utilisation, selon une quelconque des revendications 10 à 12, dans laquelle ladite farine naturelle est utilisée dans une composition comprenant en outre un ou plusieurs pigments, un agent antimoussant, un remplisseur inorganique, un conservateur et un agent coalescent.

14. Utilisation, selon la revendication 13, dans laquelle ladite farine naturelle est utilisée dans une composition dans laquelle ledit pigment est sélectionné parmi une dispersion aqueuse d'oxyde de fer et une suspension pigmentaire organique, ou une combinaison de celles-ci ; ledit agent antimoussant est sélectionné parmi des huiles insolubles, des polydiméthylsiloxanes et autres composés à base de silicone, des cires dispersées dans l'eau, des esters d'acides gras à longue chaîne et des polyacrylates d'alkyle, ou une combinaison de ceux-ci ; ledit remplisseur inorganique est sélectionné parmi des sulfates, carbonates, silicates et du talc, ou une combinaison de ceux-ci ; ledit conservateur est sélectionné parmi la MIT (Méthylisothiazolinone), la BIT (1,2- benzisothiazolin-3-one), l'OIT (2-n-octyl-4-isothiazolin-3-one), le Bronopol, la CIT (5-Chloro-2-Méthyl-Isothiazolin) ou une combinaison de ceux-ci ; et ledit agent coalescent est un solvant de masse moléculaire élevée.

15. Utilisation de la composition adhésive selon une quelconque des revendications 1 à 7 pour le collage de bois ou de tout autre matériau à du bois.
